# EUROPEAN PATENT APPLICATION

(11) **EP 4 509 349 A1**
(43) Date of publication of application: **19.02.2025**
(21) Application number: 24193767.1
(22) Date of filing: 09.08.2024
(51) Int. Cl.: B60L 53/20, B60L 53/14

(54) **VEHICLE AND CHARGING CONTROL METHOD OF VEHICLE**

(30) Priority: 10.08.2023 KR 20230105002; 30.07.2024 KR 20240100938
(71) Applicant: Hyundai Motor Company, Seoul 06797 (KR); Kia Corporation, Seocho-gu Seoul 06797 (KR)
(72) Inventor: Hong, Sung Min, Seoul (KR); Lee, Yong Gyu, Seoul (KR)
(74) Representative: Hoffmann Eitle

(57) **Abstract**

A vehicle includes a motor including a plurality of motor windings, and a plurality of single-phase battery module systems connected to each of the plurality of motor windings and including a plurality of battery modules, where each of the plurality of battery modules includes a battery and a power conversion module, and the power conversion module includes an inverter converting a DC voltage stored in the battery into an AC voltage to control the motor, and the inverter may be configured to receive an AC voltage from an AC power source through the plurality of motor windings during charging and charge the battery.

## Description

### CROSS-REFERENCE TO RELATED APPLICATION(S)

This application claims benefit of priority to Korean Patent Application Nos. 10-2023-0105002 and 10-2024-0100938 filed on August 10, 2023, and July 30, 2024 in the Korean Intellectual Property Office, the disclosure of which is incorporated herein by reference in its entirety.

### BACKGROUND

### 1. FIELD

The present disclosure relates to a vehicle and a charging control method of a vehicle.

### 2. DESCRIPTION OF RELATED ART

It should be noted that the content described in this section merely provides background information on the present disclosure and does not constitute prior art.

An eco-friendly vehicle may refer to a hybrid electric vehicle, an electric vehicle, a fuel cell electric vehicle, or the like, and may include a high-voltage battery pack, an inverter, a motor and the like.

A driving system of such an eco-friendly vehicle may include a battery pack, and an inverter as additional devices, and may be configured to charge a high-voltage battery pack using an on-board charger (OBC) installed in a vehicle during slow charging.

### SUMMARY

An aspect of the present disclosure is to provide a vehicle and a charging control method of a vehicle which may reduce the costs of the charger and an overall volume by eliminating the need for an additional on-board charger, and may enable rapid charging compared to existing on-board chargers with limited capacity.

According to an aspect of the present disclosure, provided is a vehicle including: a motor including a plurality of motor windings, and a plurality of single-phase battery module systems connected to each of the plurality of motor windings and including a plurality of battery modules, wherein each of the plurality of battery modules includes a battery and a power conversion module, and the power conversion module includes an inverter converting a direct current (DC) voltage stored in the battery into an alternating current (AC) voltage to control the motor, and the inverter may be configured to receive an AC voltage from an AC power source through the plurality of motor windings during charging and charge the battery.

According to an example embodiment of the present disclosure, the battery and an input end of the inverter may be connected to each other in parallel, and an output end of the inverter may be connected in series to an output end of an inverter included in an adjacent battery module.

According to an example embodiment of the present disclosure, one end of each of the plurality of motor windings may be interconnected with each other and connected to the AC power source, and the other end of each of the plurality of motor windings may be connected to the plurality of single-phase battery module systems.

According to an example embodiment of the present disclosure, the other end of each of the plurality of motor windings may be connected to one output end of output ends of an inverter included in one of the plurality of battery modules included in each of the plurality of single-phase battery module systems.

According to an example embodiment of the present disclosure, the other output end of the output ends of the inverter included in one of the plurality of battery modules included in one single-phase battery module system, among the plurality of single-phase battery module systems, may be interconnected with the other end of output ends of an inverter included in one of a plurality of battery modules included in another single-phase battery module system, among the plurality of single-phase battery module systems, and may be connected to the AC power supply.

According to an example embodiment of the present disclosure, the inverter may include: an upper switch and a lower switch provided in a first leg and connected in series; and an upper switch and a lower switch provided in a second leg and connected in series, and one output end of the output ends of the inverter may be between the upper switch and the lower switch of the first leg, and the other output end of the output ends of the inverter may be between the upper switch and the lower switch of the second leg.

According to an example embodiment of the present disclosure, the number of the plurality of battery modules included in one of the plurality of single-phase battery module systems may be the same as the number of the plurality of battery modules included in another single-phase battery module system, among the plurality of single-phase battery module systems.

According to an example embodiment of the present disclosure, the inverter may include an H-bridge single-phase inverter provided with a plurality of power semiconductor elements.

According to an example embodiment of the present disclosure, when a polarity of the AC power supply is positive (+), the upper switch of the first leg and the lower switch of the second leg may be turned on, and when the polarity of the AC power supply is negative (-), the lower switch of the first leg and the upper switch of the second leg may be turned on to charge the battery.

According to an example embodiment of the present disclosure, an amount of charge charged to the battery is controlled based on an amount of a current flowing through the plurality of motor windings according to a duty ratio of a turned-on switch.

According to an example embodiment of the present disclosure, the switches included in the inverter may be switched according to a frequency and a phase of the AC power.

According to an example embodiment of the present disclosure, a charging control method of a vehicle including: a motor including a plurality of motor windings; and a plurality of single-phase battery module systems connected to each of the plurality of motor windings and including a plurality of battery modules, wherein each of the plurality of battery modules includes a battery and a power conversion module, and the power conversion module includes an inverter converting a DC voltage stored in the battery into an AC voltage to control the motor, the method including: a receiving operation of receiving a charging signal for AC charging from a charger; and when the charging signal is received, a control operation of receiving an AC voltage from an AC power source through the plurality of motor windings and controlling the inverter to charge the battery.

According to an example embodiment of the present disclosure, the inverter may include: an upper switch and a lower switch provided in a first leg and connected in series; and an upper switch and a lower switch provided in a second leg and connected in series, and in the control operation, when a polarity of the AC power is positive (+), the upper switch of the first leg and the lower switch of the second leg may be turned on, and when the polarity of the AC power is negative (-), the lower switch of the first leg and the upper switch of the second leg may be turned on.

According to an example embodiment of the present disclosure, in the control operation, an amount of charge charged to the battery may be controlled based on an amount of a current flowing through the plurality of motor windings according to a duty ratio of a turned-on switch.

According to an example embodiment of the present disclosure, a motor may be driven by a plurality of low-voltage battery modules that integrate a battery and an inverter into a single module for each phase of the motor, but the battery may be charged using the inverter during charging, so that there is no need to install an additional on-board charger, thereby reducing costs of a charger and an overall volume.

Additionally, according to an example embodiment of the present disclosure, the output and capacity of an inverter may be freely increased through a series or parallel combination of a plurality of battery modules, thereby enabling rapider charging as compared to existing on-board chargers with limited capacity (e.g., 3 to 10 kW).

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 illustrates an electric vehicle driving system including a general high-voltage battery pack;
FIGS. 2 and 3 illustrate a battery module according to an example embodiment of the present disclosure;
FIG. 4 is a view illustrating a connection structure between a plurality of battery modules according to an example embodiment of the present disclosure;
FIG. 5 illustrates a single-phase battery module system according to an example embodiment of the present disclosure;
FIG. 6 is a view illustrating a connection relationship of an inverter in a three-phase battery module system according to an example embodiment of the present disclosure;
FIG. 7 is a view illustrating a connection relationship of a first DC/DC converter in a three-phase battery module system according to an example embodiment of the present disclosure;
FIG. 8 is a view illustrating a connection relationship of a second DC/DC converter in a three-phase battery module system according to an example embodiment of the present disclosure;
FIG. 9 is a view illustrating an inverter structure according to an example embodiment of the present disclosure;
FIG. 10 is a block diagram of a vehicle according to an example embodiment of the present disclosure;
FIGS. 11 to 12 are views illustrating charging paths according to polarities of AC power sources;
FIG. 13 is a flowchart illustrating a charging control method of a vehicle according to an example embodiment of the present disclosure; and
FIG. 14 is a block diagram of a computing device capable of entirely or partially implementing a control module according to an example embodiment of the present disclosure.

### DETAILED DESCRIPTION

Hereinafter, specific example embodiments of the present disclosure will be described with reference to the accompanying drawings. The following detailed description is provided to aid in a comprehensive understanding of a method, a device and/or a system described in the present specification. However, the detailed description is for illustrative purposes only, and the present disclosure is not limited thereto.

In describing example embodiments of the present disclosure in detail, when it is determined that a detailed description of known technologies associated with the present disclosure may unnecessarily obscure the gist of the present disclosure, the detailed description thereof will be omitted. Furthermore, the terms described below are defined in consideration of functions in the present disclosure, and may vary according to the intention or practice of a user or an operator. Therefore, the definition thereof should be based on the content throughout this specification. The terms used in the description are intended to describe embodiments only, and shall by no means be restrictive. Unless clearly used otherwise, expressions in a singular form include a meaning of a plural form. In the present description, an expression such as "comprising" or "including" is intended to designate a characteristic, a number, a step, an operation, an element, a portion or combinations thereof, and shall not be construed to preclude any presence or possibility of one or more other characteristics, numbers, steps, operations, elements, parts or combinations thereof.

Additionally, a 'module voltage' described below may refer to a voltage output from a battery module, and a 'system voltage' may refer to a voltage output from a battery module system configured based on the battery module.

The battery module described below may include a battery module for a vehicle, and the battery module system may include a single-phase battery module system for a vehicle and a three-phase battery module system for a vehicle.

Additionally, the present disclosure may be used not only in vehicles but also in various devices to which battery modules and battery module systems are applicable.

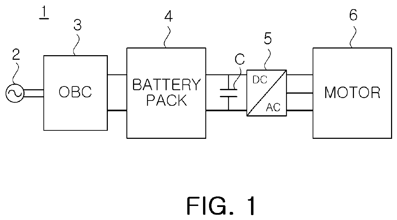

FIG. 1 is a configuration diagram illustrating an electric vehicle driving system including a general high-voltage battery pack.

As illustrated in FIG. 1, a driving system 1 of an eco-friendly vehicle includes an on-board charger (OBC) 3 for slow charging, a high-voltage battery pack 4, an inverter 5 including a DC link capacitor C, and a motor 6.

According to the constituents, the OBC 3 for slow charging converts an AC voltage provided by an AC power source 2 into a DC voltage to charge the high-voltage battery pack 4, and the inverter 5 converts the DC voltage stored in the high-voltage battery pack 4 into an AC voltage to drive the motor 6.

Since the driving system 1 of such an eco-friendly vehicle should be equipped with a separate OBC 3 for slow charging, there is a disadvantage in that the driving system 1 is expensive and occupies a large amount of volume. Additionally, since the capacity (e.g., 3 to 10 kW) of the existing OBC 3 is small, it may take a long time to charge.

Additionally, since the driving system 1 of the eco-friendly vehicle operates at high-voltage (e.g., 400 V to 800 V), a high-voltage component should be used, but the high-voltage component is more expensive than a component operating at low voltage, and has the disadvantage of generating a large amount of heat. Specifically, an SiC power semiconductor for high-voltage switching is applied to the inverter 5 operating at high-voltage, but the SiC power semiconductor has low yields as compared to high demand to make it difficult to supply and demand smoothly and is expensive.

On the other hand, since the high-voltage battery pack 4 has only one type of high-voltage output, various power conversion devices are required for application to eco-friendly vehicles. This is because eco-friendly vehicles have electrical loads with various functions, and the voltages required for each electrical load are different.

For example, eco-friendly vehicles low voltage loads of radios operating at low voltage DC voltage (e.g., 12 V to 24 V), high-voltage loads of air conditioning systems operating at high-voltage DC voltage (e.g., 400 V to 800 V), and have electrical loads requiring various voltages of motors operating at high-voltage three-phase AC voltage (e.g., 400 V to 800 V), thus requiring various types of voltages depending on the type of component.

The various power conversion devices may lose energy in a process of converting power from high-voltage to low voltage, which may lower efficiency, and may further require a separate transformer because the voltage should be significantly lowered.

Additionally, a driving system 1 of the conventional eco-friendly vehicle should have a capacitor for each of the various power conversion devices, and the driving system 1 is expensive and occupies a large amount of volume with the need of a high-capacity capacitor.

Additionally, the driving system 1 of the conventional eco-friendly vehicle has a disadvantage in that an entire high-voltage battery pack 30 should be replaced, when an abnormality occurs in any one component when an abnormality occurs in any one of battery cells included in the high-voltage battery pack 4, and when an abnormality occurs in any one of components, an entire system may be stopped, which may deteriorate the reliability of the entire system.

Meanwhile, in the driving system 1 of the conventional eco-friendly vehicle, each PE system should be designed according to different specifications depending on the vehicle type, which may complicate a process thereof and increase production costs.

A battery module system according to an example embodiment of the present disclosure described below may be configured by a series/parallel combination of a plurality of battery modules, and each battery module may include a low-voltage battery and a power conversion device such as an inverter and a converter that operates at low voltage.

In other words, a battery module system according to an example embodiment of the present disclosure may be configured based on a battery module, and since each battery module includes a power conversion device, the battery module system may not only store/release electric energy but also perform power conversion in the battery module. Accordingly, the battery module according to an example embodiment of the present disclosure may convert DC power into AC power as needed, or convert the magnitude of the battery power and output the power. Additionally, a high-voltage output may be formed by connecting outputs of each battery module in series, or a high-current output may be formed by connecting the outputs of each battery module in parallel, and voltages of each battery module may be monitored to perform balancing control. Hereinafter, a battery module according to an example embodiment of the present disclosure and a battery module system including the same will be described in more detail.

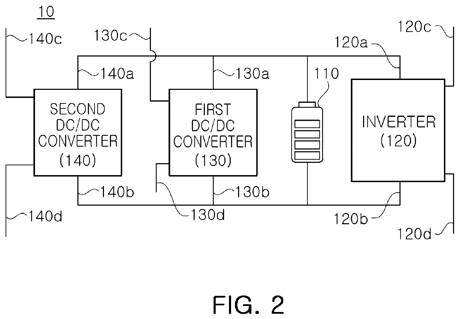

FIG. 2 illustrates a battery module according to an example embodiment of the present disclosure.

Referring to FIG. 2, a battery module 10 according to an example embodiment of the present disclosure may include a battery 110, an inverter 120, a first DC/DC converter 130, and a second DC/DC converter 140.

The battery 110 may output a battery voltage, and which may charge or discharge electric energy. Additionally, the battery voltage may be configured as a base voltage of the battery module 10, and may provide an input voltage to the inverter 120, the first DC/DC converter 130, and the second DC/DC converter 140.

Additionally, the battery 110 may have a battery voltage having a lower magnitude than that of a typical high-voltage battery pack. Accordingly, the battery module 10 for a vehicle according to an example embodiment of the present disclosure may apply a power conversion element capable of operating at low voltage, thereby reducing production costs.

Additionally, according to the battery module 10 according to an example embodiment of the present disclosure, various sizes and types of voltages may be output depending on the series/parallel combination of the battery modules 10, so that a single standard battery module 10 may be used and applied to various standard vehicle models, and production costs may be reduced.

For example, when the battery voltage is set to 100V, four battery modules 10 may be connected in series to form a battery module system outputting 400V voltage, and eight battery modules 10 may be combined in series to form a battery module system outputting 800V voltage. Additionally, for example, when the battery voltage is set to 50V, eight battery modules 10 may be connected in series to form a battery module system outputting 400V voltage, and 16 battery modules 10 may be connected in series to form a battery module system outputting 800V voltage.

Additionally, a single-phase battery module system may be configured by connecting the battery modules 10 in series and outputting a high-voltage AC voltage using an output of an inverter 120, and a plurality of single-phase battery module systems may be used to output a three-phase AC voltage. Additionally, a battery module system in which a high current flows may be formed by combining the battery modules 10 in parallel.

The inverter 120 may convert a battery voltage into an AC module voltage and output the voltage. Additionally, the inverter 120 may include input ends 120a and 120b and output ends 120c and 120d, and the input ends 120a and 120b of the inverter may be connected in parallel to the battery 110 to receive the battery voltage, and the output ends 120c and 120d of the inverter 120 may output the AC module voltage. Hereinafter, the output ends 120c and 120d of the inverter 120 may be referred to as AC module output ends outputting an AC module voltage. Additionally, the inverter 120 may be configured to supply AC power according to the AC module voltage to an AC load. In this case, the AC load may be a load such as a motor using an AC voltage as a driving voltage.

Additionally, the first DC/DC converter 130 may convert the battery voltage into a first DC module voltage lower than the battery voltage, and may output the first DC module voltage.

Additionally, the first DC module voltage may be set to a driving voltage of a low-voltage load. For example, the low-voltage load may be an electric load such as various lamps and radios, infotainment, or the like of an electric vehicle. Additionally, the first DC module voltage may be set to 12 V, 24 V, or 48 V, which is the driving voltage of the low-voltage load. However, a magnitude of voltage mentioned herein is only one example, and may be set to a voltage having various magnitudes depending on a design thereof.

Additionally, the first DC/DC converter 130 may include input ends 130a and 130b and output ends 130c and 130d. The input ends 130a and 130b of the first DC/DC converter may be connected in parallel to the battery 110 to receive a battery voltage, and the output ends 130c and 130d of the first DC/DC converter may output the first DC module voltage. Hereinafter, the output ends 130c and 130d of the first DC/DC converter may be referred to as first DC module output ends, outputting the first DC module voltage.

Additionally, the output ends 130c and 130d of the first DC/DC converter may be directly connected to the low-voltage load to provide the first DC module voltage.

In an example embodiment, one output end 130d, among the output ends of the first DC/DC converter 130, may be grounded, and the other output end 130c, among the output ends of the first DC/DC converter 130, may be connected to the low-voltage load to output the first DC module voltage. In another example embodiment, both output ends of the first DC/DC converter may be connected to both ends of the low-voltage load to output the first DC module voltage.

Additionally, the second DC/DC converter 140 may convert a battery voltage into a second DC module voltage and output the second DC module voltage. The second DC module voltage may be set to a value, greater than that of the first DC module voltage output from the first DC/DC converter 130. Additionally, the second DC module voltage may be lower than or equal to the battery voltage, or may be higher than the battery voltage.

Additionally, the second DC module voltage, output from the second DC/DC converter 140, may be connected in series to a second DC module voltage output from another battery module 10 to provide power to a high-voltage load. In other words, the second DC module voltage, output from the second DC/DC converter 140, may not provide power to the high-voltage load as a single output, but may be connected in series to the second DC module voltage of another battery module 10 to provide power to the high-voltage load. A battery voltage, included in the battery module 10, may be formed as a low voltage. Accordingly, in order to provide a voltage to a high-voltage load such as an air conditioning system or the like, a plurality of battery modules 10 may be combined in series with each other to provide a high voltage. In other words, the output ends 140c and 140d of the second DC/DC converter 140 may be connected in series to output ends of a second DC/DC converter of another battery module to form a high voltage, thereby providing power to the high-voltage load.

Additionally, the second DC/DC converter 140 may include input ends 140a and 140b and output ends 140c and 140d. The input ends 140a and 140b of the second DC/DC converter 140 may be connected in parallel to the battery 110 to receive a battery voltage, and the output ends 140c and 140d of the second DC/DC converter may output a second DC module voltage. As used herein, the output ends 140c and 140d of the second DC/DC converter may also be referred to as second DC module output ends, outputting the second DC module voltage.

Additionally, the output ends 140c and 140d of the second DC/DC converter may be connected in series to output ends of a second DC/DC converter included in another battery module, or may be connected to a high-voltage load. In this case, a specific connection structure with another battery module 10 will be described below.

Additionally, the battery 110 may be connected in parallel to the input ends 120a and 120b of the inverter, the input ends 130a and 130b of the first DC/DC converter, and the input ends 140a and 140b of the second DC/DC converter.

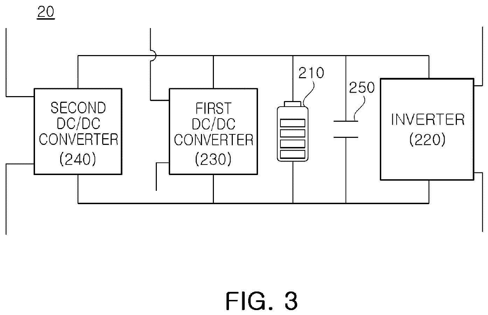

FIG. 3 illustrates a battery module according to an example embodiment of the present disclosure.

Referring to FIG. 3, a battery module 20 according to an example embodiment of the present disclosure may include a battery 210, an inverter 220, a first DC/DC converter 230, a second DC/DC converter 240, and a common capacitor 250. Additionally, the common capacitor 250 may be connected in parallel to the battery 210. The battery module 20, illustrated in FIG. 3, may include all components of the battery module 10 illustrated in FIG. 1, and may further include the common capacitor 250.

According to the battery module 20 according to an example embodiment of the present disclosure, one common capacitor may be shared without applying a capacitor for each inverter and each converter element. Accordingly, a volume thereof may be reduced, and a low-voltage capacitor may be applied, thereby reducing production costs.

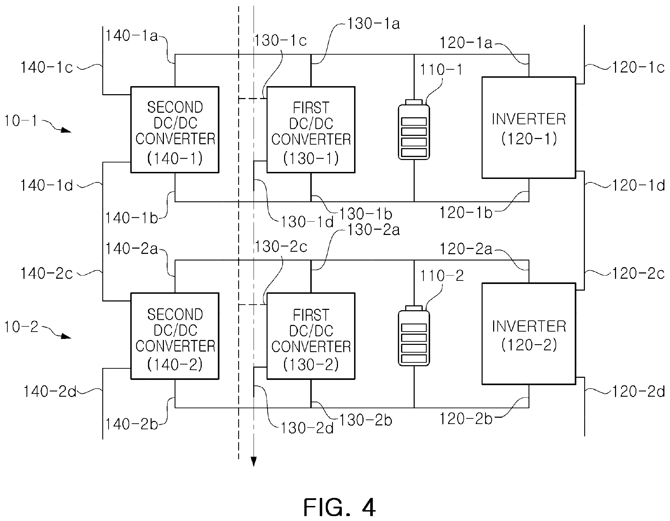

FIG. 4 is a view illustrating a connection structure between a plurality of battery modules according to an example embodiment of the present disclosure.

Referring to FIG. 4, a first battery module 10-1 and a second battery module 10-2 may include the same components, and may have the same structure. Additionally, the first battery module 10-1 and the second battery module 10-2 may include batteries 110-1 and 110-2, inverters 120-1 and 120-2, first DC/DC converters 130-1 and 130-2, and second DC/DC converters 140-1 and 140-2, respectively. Alternatively, as described with reference to FIG. 3, the first battery module 10-1 and the second battery module 10-2 may further include a common capacitor.

Additionally, a plurality of battery modules may be connected to each other to form a battery system, and a connection relationship between each of the plurality of battery modules, included in the battery system, may be the same as the structure illustrated in FIG. 4.

More specifically, an output end 120-1d of the inverter 120-1 included in the first battery module 10-1 may be connected in series to an output end 120-2c of the inverter 120-2 included in the second battery module 10-2. Additionally, when an inverter outputs an AC module voltage, the inverter 120-1, included in the first battery module 10-1, and the inverter 120-2, included in the second battery module 10-2, may be connected in series to each other to output an AC module voltage having a magnitude twice as high as that of the AC module voltage. For example, when the AC module voltage is set to 100V, the two inverters 120-1 and 120-2, connected in series to each other, may output an AC voltage of 200V. In this case, a magnitude of the AC voltage may refer to a maximum value, an effective value, or an average value of the AC voltage.

Additionally, an output end of the first DC/DC converter 130-1 included in the first battery module 10-1 and an output end of the first DC/DC converter 130-2 included in the second battery module 10-2 may be connected to each other in parallel. In an example embodiment, one end 130-1d of the first DC/DC converter 130-1 included in the first battery module 10-1 may be grounded, and one output end 130-2d, among the output ends of the first DC/DC converter 130-2 included in the second battery module 10-2, may be grounded. Additionally, the other output end 130-1c, among the output ends of the first DC/DC converter 130-1 included in the first battery module 10-1, may be connected in parallel to the other output end 130-2c, among the output ends of the first DC/DC converter 130-2 included in the second battery module 10-2, to output a first DC module voltage. Additionally, the other output ends connected to each other in parallel, among the output ends of the first DC/DC converters, may output the first DC module voltage, and may be connected to a low-voltage load using the first DC module voltage as a driving voltage to provide a voltage.

Additionally, an output end of the second DC/DC converter 140-1 included in the first battery module 10-1 may be connected in series to an output end of the second DC/DC converter 140-2 included in the second battery module 10-2. More specifically, one output end 140-1d, among the output ends of the second DC/DC converter 140-1 included in the first battery module 10-1, may be connected to the other output end 140-2c, among the output ends of the second DC/DC converter 140-2 of the second battery module 10-2.

Additionally, when the second DC/DC converters 140-1 and 140-2 output a second DC module voltage, the second DC/DC converter 140-1, included in the first battery module 10-1, and the second DC/DC converter 140-2, included in the second battery module 10-2, may be connected in series to each other to output a second DC module voltage having a magnitude twice as high as that of the second DC module voltage. For example, when the second DC module voltage is set to 100 V, the two second DC/DC converters 140-1 and 140-2 connected in series to each other may output 200 V.

In other words, the first battery module 10-1 and the second battery module 10-2 may be connected in series to each other, the first DC/DC converters may be connected to each other in parallel, and the second DC/DC converters may be connected in series to each other.

Furthermore, a single-phase battery system according to an example embodiment of the present disclosure may include a plurality of battery modules 10-1, 10-2, ..., 10-N. Additionally, each of the plurality of battery modules 10-1, 10-2, ..., 10-N, included in the single-phase battery system 100, may be the same as the battery modules 10 and 20 illustrated in FIG. 2 or 3. Additionally, the plurality of battery modules 10-1, 10-2, ..., 10-N, included in the single-phase battery system, may have a connection structure between battery modules illustrated in FIG. 4.

Referring back to FIG. 2, the battery module according to an example embodiment of the present disclosure may include first DC module output ends 130c and 130d corresponding to output ends of the first DC/DC converter 130, second DC module output ends 140c and 140d corresponding to output ends of the second DC/DC converter 140, and AC module output ends 120c and 120d corresponding to output ends of the inverter 120.

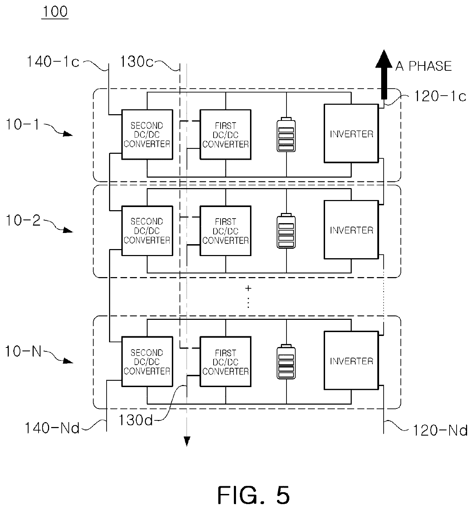

Additionally, referring to FIG. 5, the single-phase battery system 100 according to an example embodiment of the present disclosure may include first DC system output ends 130c and 130d in which first DC module output ends, respectively included in the plurality of battery modules, are connected to each other in parallel. In this case, the first DC system output ends 130c and 130d may output a first DC system voltage, and the first DC system voltage may have a magnitude, the same as that of a first DC module voltage output from the output ends of the first DC/DC converter.

Additionally, the single-phase battery system 100 according to an example embodiment of the present disclosure may include second DC system output ends 140-1c and 140-Nd in which second DC module output ends, respectively included in the plurality of battery modules, are connected in series to each other. Here, the second DC system output ends 140-1c and 140-Nd may output a second DC system voltage, and the second DC system voltage may have a magnitude, integer (N) times as high as that of a second DC module voltage output from the output ends of the second DC/DC converter.

Additionally, the single-phase battery system 100 according to an example embodiment of the present disclosure may include AC system output ends 120-1c and 120-Nd in which AC module output ends, respectively included in the plurality of battery modules, are connected in series to each other. Additionally, the AC system output ends 120-1c and 120-Nd may output an AC system voltage, and the AC system voltage may have a magnitude, integer (N) times as high as that of an AC module voltage output from the output ends of the inverter. Meanwhile, the AC system output ends may provide AC power to an AC load, and may provide an input voltage for one phase of a three-phase AC voltage.

In other words, in the single-phase battery system 100, respective elements of the plurality of battery modules may be connected in series or parallel to each other to provide various output voltages including a first DC system voltage, a second DC system voltage, and an AC system voltage.

Additionally, an electric vehicle may include a low-voltage load operating at low voltage, a high-voltage load operating at a high voltage, and an AC load, such as a motor operating at a high-voltage three-phase AC voltage. Additionally, the low-voltage load may use a first DC system voltage as a driving voltage, the high-voltage load may use a second DC system voltage as a driving voltage, and the AC load may use an AC system voltage as a driving voltage.

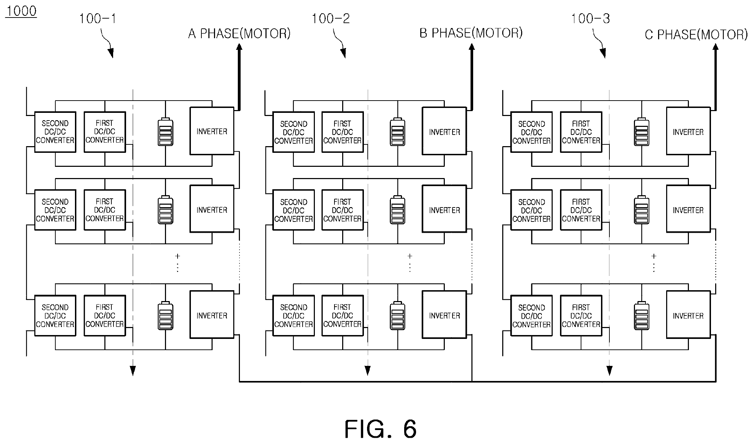

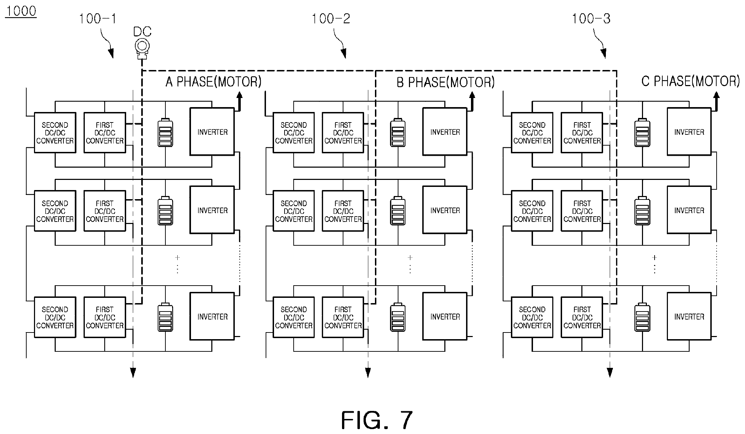

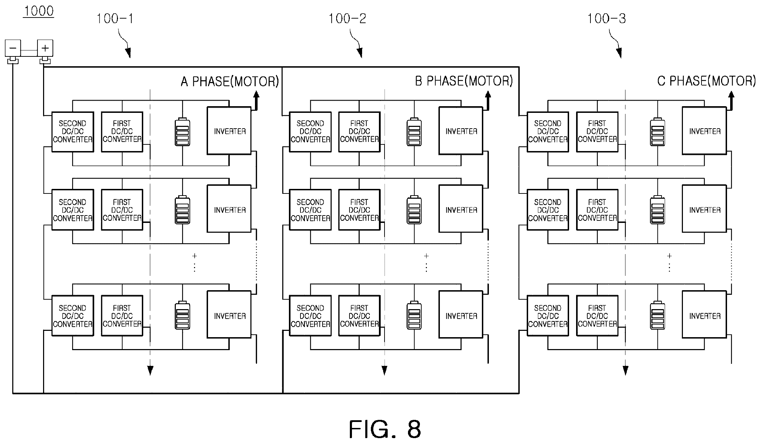

FIG. 6 is a view illustrating a connection relationship of an inverter in a three-phase battery module system 1000 according to an example embodiment of the present disclosure. Additionally, FIG. 7 is a view illustrating a connection relationship of a first DC/DC converter in a three-phase battery module system according to an example embodiment of the present disclosure. Additionally, FIG. 8 is a view illustrating a connection relationship of a second DC/DC converter in a three-phase battery module system according to an example embodiment of the present disclosure.

Referring to FIGS. 6 to 8, a three-phase battery system 1000 according to an example embodiment of the present disclosure may include a plurality of single-phase battery systems 100-1, 100-2 and 100-3, and each of the single-phase battery systems may include a plurality of battery modules.

Referring to FIG. 6, the three-phase battery system 1000 according to an example embodiment of the present disclosure may include three single-phase battery systems 100-1, 100-2, and 100-3. Additionally, the single-phase battery systems may include an AC system output end in which inverter output ends are connected in series to each other. Additionally, the AC system output ends, respectively included in the three single-phase battery system, may output different AC voltages having the same magnitude and the same phase difference.

For example, the AC system output ends, respectively included in the three single-phase battery system, may output different AC voltages having a phase difference of 120 degrees. Accordingly, the three-phase battery system may output a three-phase AC voltage, and may provide a driving voltage to an AC load (e.g., a motor) using the three-phase AC voltage as a driving voltage.

Additionally, referring to FIG. 7, each of the plurality of single-phase battery systems 100-1, 100-2 and 100-3, included in the three-phase battery system 1000 according to an example embodiment of the present disclosure, may include a first DC system output end in which a plurality of first DC /DC converters are connected to each other in parallel to output a first DC system voltage. Additionally, the first DC system output ends, respectively included in the plurality of single-phase battery module systems 100-1, 100-2 and 100-3, may be connected to each other in parallel.

In other words, when the single-phase battery system 100 includes N first DC/DC converters, 3 *N first DC/DC converters, included in the three-phase battery system 1000, may all be connected to each other in parallel to output a first AC module voltage or a first DC system voltage having a magnitude, the same as that of the first DC module voltage.

Additionally, referring to FIG. 8, each of the plurality of single-phase battery module systems 100-1, 100-2 and 100-3, included in the three-phase battery system 1000 according to an example embodiment of the present disclosure, may include a second DC system output end in which a plurality of second DC/DC converters are connected in series to each other to output a second DC system voltage. Additionally, the second DC system output ends, respectively included in the plurality of single-phase battery module systems 100-1, 100-2 and 100-3, may be connected to each other in parallel. That is, in the single-phase battery system 100, second DC module output ends may be connected in series to form a second DC system output end. In the three-phase battery system 1000, each of a plurality of second DC system output ends may be connected to each other in parallel.

In FIGS. 4 to 8 described above, (-) ends of the first DC/DC converters are illustrated as being combined and grounded, but it may also be possible to simply combine the (-) ends of the first DC/DC converters to one. Additionally, the three-phase battery system may further include a controller (not illustrated). The controller may individually control each battery module, and may individually control an inverter, a first DC/DC converter, and a second DC/DC converter included in each battery module. Accordingly, according to an example embodiment of the present disclosure, the controller may perform balancing control for each power conversion element and each battery module, thereby increasing energy efficiency.

Additionally, when an issue occurs in one module, among N battery modules, the controller may perform control to block only the battery module in which the issue has occurred, thereby ensuring reliability of the entire system.

Additionally, the controller may individually control each battery module. Accordingly, even when degradation occurs differently for each battery module, degradation performance of each battery module may be actively controlled.

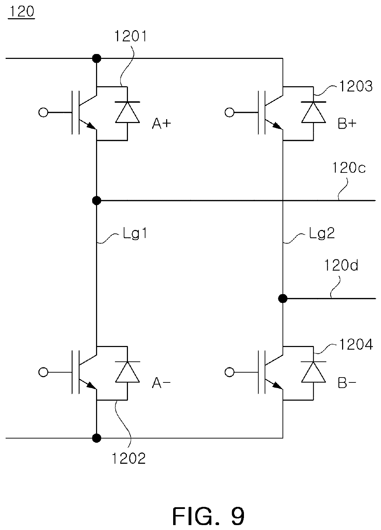

Meanwhile, FIG. 9 is a view illustrating an inverter structure according to an example embodiment of the present disclosure.

The inverter 120 may include an upper switch 1201 and a lower switch 1202 provided in a first leg Lg1 and connected in series, and an upper switch 1203 and a lower switch 1204 provided in a second leg Lg2 and connected in series. Here, one output end 120c of the output ends 120c and 120d of the inverter 112 may be between the upper switch 1201 and the lower switch 1202 of the first leg Lg1, and the other output end 120d of the output ends 112c and 112d of the inverter 112 may be between the upper switch 1203 and the lower switch 1204 of the second leg Lg2.

Referring to FIG. 9, the inverter 120 may include a plurality of power semiconductor devices, for example, Si-MOSFET (Metal Oxide Semiconductor Field Effect Transistor, MOSFET) elements 1201, 1202, 1203 and 1204, and may be formed as an H-bridge single-phase inverter structure.

In conventional electric vehicle systems, SiC power semiconductors are mainly applied. Such SiC power semiconductors have high efficiency and rapid switching speed, but are expensive.

Additionally, the conventional electric vehicle systems sometimes use insulated gate bipolar transistors (IGBT) at low voltage, but while the IGBT is relatively inexpensive, the IGBT may have slow switching speed.

On the other hand, the Si-MOSFET elements may have rapid switching speed and may be relatively inexpensive, but performance thereof may be deteriorated at a high voltage, so that it may be difficult to apply the Si-MOSFET elements to conventional high-voltage electric vehicle systems.

Since the battery module according to an example embodiment of the present disclosure is driven at low voltage, the Si-MOSFET elements may be applied to the inverter. Accordingly, the inverter included in the battery module according to an example embodiment of the present disclosure may use a plurality of Si-MOSFET elements, thereby reducing the production costs as well as having rapid switching speed. Accordingly, the power efficiency may be improved, so that a vehicle travel distance may be increased, and with an increase in the travel distance, the battery capacity may be reduced to reduce production costs.

Additionally, the inverter according to an example embodiment of the present disclosure may be configured with an H-bridge single-phase inverter structure, and may maintain stability even at a high current.

Additionally, FIG. 9 illustrates a case of forming an H-bridge circuit using four Si-MOSFETs as an example. However, the H-bridge circuit may also be formed by connecting a plurality of Si-MOSFETs to each other in parallel to enable switching of a high current.

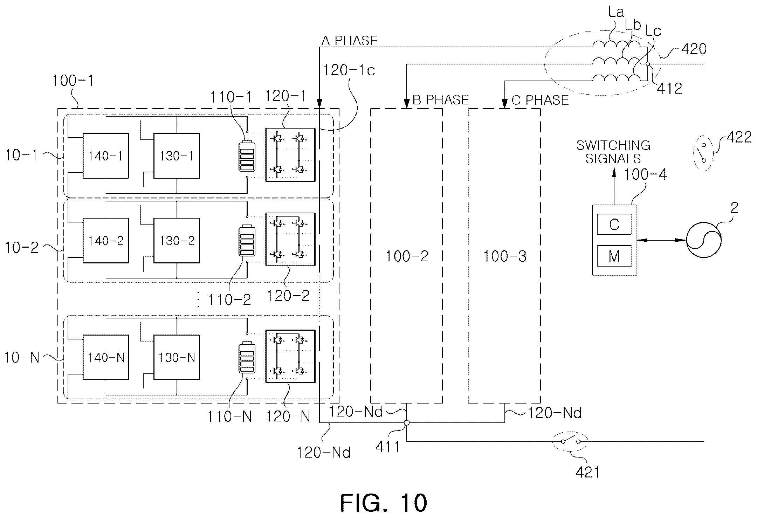

Meanwhile, FIG. 10 is a configuration diagram of a vehicle according to an example embodiment of the present disclosure.

As illustrated in FIG. 10, a vehicle according to an example embodiment of the present disclosure may include a plurality of single-phase battery module systems 100-1, 100-2 and 100-3, a control module 100-4, and a motor 420 including a plurality of motor wirings La, Lb and Lc.

First, the plurality of single-phase battery module systems 100-1, 100-2 and 100-3 may include a plurality of battery modules.

For example, in the case of phase A of the motor, the single-phase battery module system 100-1 may include a plurality of battery modules 10-1, 10-2 and 10-N, and each of the plurality of battery modules 10-1, 10-2 and 10-N may include batteries 110-1, 110-2 and 110-N, inverters 120-1, 120-2 and 120-N, first DC/DC converters 130-1, 130-2 and 130-N), and second DC/DC converters 140-1, 140-2 and 140-N. Here, the batteries 110-1, 110-2 and 110-N and input ends of the inverters 120-1, 120-2 120-N may be connected to each other in parallel, and output ends of the inverters 120-1, 120-2 and 120-N may be connected in series to the output ends of the inverters included in adjacent battery modules.

Although not illustrated separately for the sake of simplicity of the invention, each of the single-phase battery module systems 100-2 and 100-3 of the other phases (phase B and phase C) of the motor may also have the same configuration.

Additionally, the number of a plurality of battery modules included in any one of the plurality of single-phase battery module systems 100-1, 100-2 and 100-3 may be the same as the number of a plurality of battery modules included in another single-phase battery module system, among the plurality of single-phase battery module systems.

Additionally, the other output end of the output ends of the inverter included in any one of the plurality of battery modules included in each of the plurality of single-phase battery module systems 100-1, 100-2 and 100-3 may be interconnected with the other output end of the output ends of the inverter included in any one of the plurality of battery modules included in each of the other single-phase battery module systems 100-1, 100-2 and 100-3 and may be connected to an AC power source 2.

For example, one of the plurality of battery modules 10-1, 10-2 and 10-N included in the single-phase battery module system 100-1, for example, the other output end 120-Nd of the output ends of the inverter 120-N included in the battery module 10-N disposed in a lowermost end may be interconnected with one of the plurality of battery modules included in other single-phase battery module systems 100-2 and 100-3, for example, the other output end 120-Nd of the output ends of the inverter included in the battery module disposed in the lowermost end and may be connected to the AC power source 2.

That is, the single-phase battery module systems 100-1, 100-2 and 100-3 may be interconnected at a connection point 411, and a lower switch 421 may be further included between the connection point 411 and an AC power source 10.

Meanwhile, the motor 420 may include a plurality of motor wirings La, Lb and Lc, and each of the plurality of motor wirings La, Lb and Lc may be connected to each of the plurality of single-phase battery module systems 100-1, 100-2 and 100-N.

The motor wirings La, Lb and Lc may include, for example, stator windings of the motor, and may be a kind of filter for preventing a sudden change in current flowing into the battery. In this manner, by utilizing the existing stator winding instead of a separate inductor, there is no need to add an inductor, thus reducing costs thereof, and since there is no need to perform a neutral point connection operation or the like, the time required for the operation may be reduced.

Specifically, one end of each of the plurality of motor wirings La, Lb and Lc may be interconnected (see 412) and connected to the AC power source 2, and the other end of each of the plurality of motor wirings La, Lb and Lc may be connected to each of the plurality of single-phase battery module systems 100-1, 100-2 and 100-3.

Additionally, the other end of each of the plurality of motor wirings La, Lb and Lc may be connected to one of the plurality of battery modules included in each of the plurality of single-phase battery module systems 100-1, 100-2 and 100-3, for example, one output end of the output ends of the single-phase inverter included in the battery module disposed in an uppermost end.

For example, in the case of the phase A of the motor, the other end of the motor wiring La may be connected to one of the plurality of battery modules 10-1, 10-2 and 10-N included in the single-phase battery module system 100-1, for example, one output end 120-1c of the output ends of the inverter 120-1 included in the battery module 10-1 disposed in the uppermost end. The same manner as the connection manner described above may be applied to other single-phase battery module systems 100-2 and 100-3.

Meanwhile, the control module 100-4 may include a controller C and a memory M, and may control the inverter and other switches through switching signals.

When performing AC charging, that is, when a charging signal for the AC charging is received from the AC power source 2, the controller C may receive an AC voltage from the AC power source 2 through the plurality of motor wirings La, Lb and Lc, and may control the inverter to charge a battery.

Specifically, when a polarity of the AC power source is positive (+), the controller C may turn on the upper switch of the first leg and the lower switch of the second leg, and when the polarity of the AC power source is negative (-), the controller C may turn on the lower switch of the first leg and the upper switch of the second leg.

In this case, an amount of charge charged to the battery may be controller based on the amount of a current flowing in a plurality of motor windings according to a duty ratio of the turned-on switch.

According to an example embodiment of the present disclosure, the controller C may control the inverter for each of the plurality of single-phase battery module systems. For example, the controller C may control all of the plurality of single-phase battery module systems equally through control of the inverter, or may control each of the plurality of single-phase battery module systems.

The control module 100-4 may include a processor (e.g., a computer, a microprocessor, a CPU, an ASIC, a logic circuit, or the like) and a memory storing software instructions providing various functions when executed by the processor. Here, the processor and the memory may be implemented as separate semiconductor circuits. Alternatively, the processor and the memory may be implemented as a single integrated semiconductor circuit. There may be one or more processors.

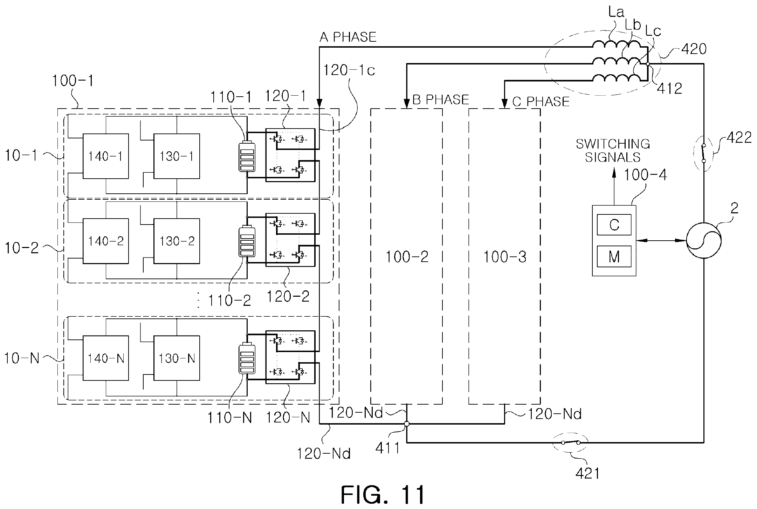

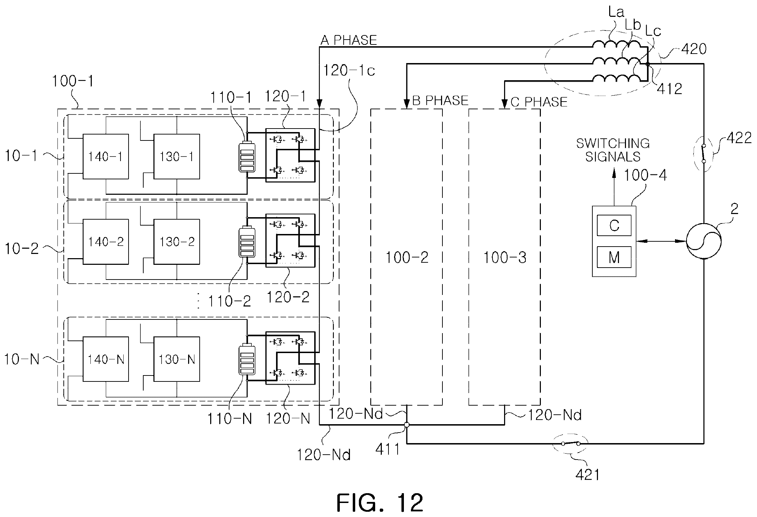

Meanwhile, FIGS. 11 and 12 are views illustrating charging paths according to polarities of an AC power supply.

FIG. 11 illustrates a charging path when the polarity of the AC power supply 2 is positive (+), and FIG. 12 illustrates a charging path when the polarity of the AC power supply 2 is negative (-). Hereinafter, a single-phase battery module system 100-1 is described, but the same manner as the description of the single-phase battery module system 100-1 may be applied to other single-phase battery module systems 100-2 and 100-3.

Specifically, according to an example embodiment of the present disclosure, as illustrated in FIGS. 9 to 11, the upper switch 1201 of the first leg Lg1 and the lower switch 1204 of the second leg Lg2 of the inverters 120-1, 120-2 and 120-N when the polarity of the AC power source 2 is positive (+) may be turned on, and the lower switch 1202 of the first leg Lg1 and the upper switch 1203 of the second leg Lg2 may be turned off. Accordingly, batteries 110-1, 110-2 and 110-N respectively included in the battery module systems 100-1 may be charged through a path (see the bold solid line) as illustrated in FIG. 11.

In this case, the amount of charge charged to each of the battery 110-1, 110-2 and 110-N may be controlled based on the amount of a current flowing in the motor wiring La according to the duty ratio of the turned-on switch. That is, the inverter is configured to receive an AC voltage from the AC power source through the plurality of motor wirings La, Lb and Lc during charging and may charge the battery.

On the other hand, as illustrated in FIGS. 9, 10, and 12, the lower switch 1202 of the first leg Lg1 and the upper switch 1203 of the second leg Lg2 of the inverters 120-1, 120-2 and 120-N when the polarity of the AC power source 2 is negative (-) may be turned on, and the upper switch 1201 of the first leg Lg1 and the lower switch 1204 of the second leg Lg2 may be turned off.

Accordingly, the batteries 110-1, 110-2 and 110-N respectively included in the battery module systems 100-1 may be charged through a path (see the thick solid line) as illustrated in FIG. 12. In this case, the amount of charge charged to each of the batteries 110-1, 110-2 and 110-N may be controlled based on the amount of a current flowing in the motor wiring La according to the duty ratio of the turned-on switch.

Additionally, the switches 1201 to 1204 included in the inverter 120-1, 120-2 and 120-N may be switched according to the frequency and the phase of the AC power source 2. A phase-locked loop (PLL) may be used for this purpose.

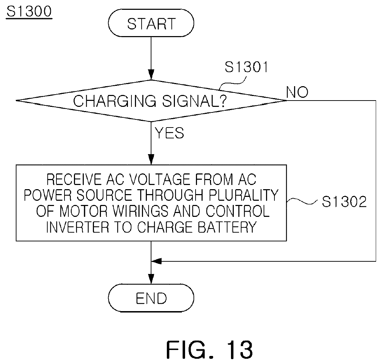

Meanwhile, FIG. 13 is a flowchart illustrating a charging control method of a vehicle according to an example embodiment of the present disclosure.

Referring to FIG. 13, a charging control method S1600 of a vehicle according to an example embodiment of the present disclosure may be started by an operation of receiving a charging signal for AC charging from a charger 2 in a control module 100-4 (S1601).

Then, the control module 100-4 may receive an AC voltage from an AC power source 2 through a plurality of motor wirings La, Lb and Lc and may control an inverter to charge a battery (S1602).

Specifically, when a polarity of the AC power source is positive (+), the control module 100-4 may turn on an upper switch of a first leg and a lower switch of a second leg, and when the polarity of the AC power source is negative (-), the control module 100-4 may turn on a lower switch of the first leg and an upper switch of the second leg.

In this case, the amount of charge charged to the battery may be controlled based on the amount of a current flowing in a plurality of motor wirings according to the duty ratio of the turned-on switch.

In this manner, according to an example embodiment of the present disclosure, the motor may be driven by a plurality of low-voltage battery modules configured to integrate a battery and an inverter into a single module for each phase of the motor, but during charging, the battery may be charged using an inverter, so that there is no need to install a separate on-board charger, thereby reducing the costs of the charger and reducing an overall volume.

Additionally, according to an example embodiment of the present disclosure, the output and the capacity of the inverter may be freely increased through a series or parallel combination of a plurality of battery modules, so that rapid charging may be performed as compared to existing on-board chargers with limited capacity (e.g., 3 to 10 kW).

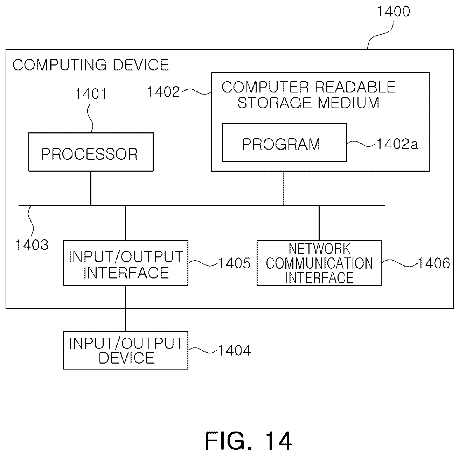

Finally, FIG. 14 is a block diagram of a computing device capable of entirely or partially implementing a control module 100-4 according to an example embodiment of the present disclosure.

As illustrated in FIG. 14, a computing device 1400 includes at least one processor 1401, a computer-readable storage medium 1402, and a communication bus 1403.

The processor 1401 may cause the computing device 1400 to operate according to the example embodiments described above. For example, the processor 1401 may execute one or more programs stored on the computer-readable storage medium 1402. The one or more programs may include one or more computer-executable instructions, and the computer-executable instructions may be configured to cause the computing device 1400 to perform operations according to an example embodiment when executed by the processor 1401.

The computer-readable storage medium 1402 is configured to store computer-executable instructions, a program code, program data, and/or other suitable forms of information. A program 1702a stored on the computer-readable storage medium 1402 includes a set of instructions executable by the processor 1401. In an example embodiment, the computer-readable storage medium 1402 may be a memory (e.g., a volatile memory such as random access memory, a nonvolatile memory, or a suitable combination thereof), one or more magnetic disk storage devices, optical disk storage devices, flash memory devices, any other form of storage medium accessed by the computing device 1400 and capable of storing desired information, or a suitable combination thereof.

The communication bus 1403 interconnects various other components of the computing device 1400 by including the processor 1401 and the computer-readable storage medium 1402.

The computing device 1400 may also include one or more input/output interfaces 1405 providing an interface for one or more input/output devices 1404, and one or more network communication interfaces 1406. The input/output interfaces 1405 and the network communication interfaces 1406 are connected to the communication bus 1403. The network may be a cellular network, such as Global System for Mobile Communications (GSM), Enhanced Data Rates for GSM Evolution (EDGE), General Packet Radio Service (GPRS), Code Division Multiple Access (CDMA), Time Division-CDMA (TD-CDMA), Universal Mobile Telecommunications System (UMTS), Long Term Evolution (LTE), or another cellular network.

The input/output device 1404 may be connected to other components of the computing device 1400 via the input/output interface 1405. Examples of the input/output devices 1404 may include input devices such as pointing devices (such as a mouse or trackpad), keyboards, touch input devices (such as a touchpad or a touchscreen), voice or sound input devices, various types of sensor devices and/or photographing devices, and/or output devices such as display devices, printers, speakers and/or network cards. The exemplary input/output device 1404 may be included in the computing device 1400 as a component forming the computing device 1400, or may be connected to the computing device 1400 as a separate device distinct from the computing device 1400.

Meanwhile, example embodiments of the present disclosure may include a program for performing the methods described herein on a computer, and a computer-readable recording medium including the program. The computer-readable recording medium may include program commands, local data files, local data structures, and the like, alone or in combination. The medium may be one that is specifically designed and configured for the present disclosure, or may be one that is commonly available in the field of computer software. Examples of the computer-readable recording medium include magnetic media such as hard disks, floppy disks and magnetic tapes, optical recording media such as CD-ROM and DVD, and hardware devices specifically configured to store and execute program commands such as ROM, RAM, and a flash memory. Examples of the program may include machine language codes such as those generated by a compiler, as well as high-level language codes that may be executed by a computer using an interpreter and the like.

Although representative example embodiments of the present disclosure have been described in detail above, those skilled in the art will understand that the above-described embodiments can be modified in various ways without departing from the scope of the present disclosure. Therefore, the scope of the present disclosure should not be limited to the described example embodiment and should be determined by the claims described below as well as those equivalent to the claims.

While example embodiments have been shown and described above, it will be apparent to those skilled in the art that modifications and variations could be made without departing from the scope of the present invention as defined by the appended claims.

## Claims

1. A vehicle comprising:
a motor including a plurality of motor windings; and
a plurality of single-phase battery module systems connected to each of the plurality of motor windings and including a plurality of battery modules, wherein each of the plurality of battery modules includes a battery and a power conversion module, and each power conversion module includes an inverter converting a DC voltage stored in the battery into an AC voltage to control the motor,
wherein each inverter is configured to receive an AC voltage from an AC power source through the plurality of motor windings during charging, and to charge the battery.

2. The vehicle according to claim 1, wherein the battery and an input end of the inverter are connected to each other in parallel, and
an output end of the inverter is connected in series to an output end of an inverter included in an adjacent battery module.

3. The vehicle according to claim 1, wherein one end of each of the plurality of motor windings is interconnected with each other and connected to the AC power source, and
an other end of each of the plurality of motor windings is connected to the plurality of single-phase battery module systems.

4. The vehicle according to claim 3, wherein the other end of each of the plurality of motor windings is connected to one output end of output ends of an inverter included in one of the plurality of battery modules included in each of the plurality of single-phase battery module systems.

5. The vehicle according to claim 4, wherein the other output end of the output ends of the inverter included in one of the plurality of battery modules included in one single-phase battery module system, among the plurality of single-phase battery module systems, is interconnected with the other end of output ends of an inverter included in one of a plurality of battery modules included in another single-phase battery module system, among the plurality of single-phase battery module systems, and is connected to the AC power source.

6. The vehicle according to claim 5, wherein each inverter includes:
a first upper switch and a first lower switch provided in a first leg and connected in series; and
a second upper switch and a second lower switch provided in a second leg and connected in series;
wherein one output end of the output ends of the inverter is positioned between the first upper switch and the first lower switch; and
the other output end of the output ends of the inverter is positioned between the second upper switch and the second lower switch.

7. The vehicle according to claim 1, wherein a number of the plurality of battery modules included in a first of the plurality of single-phase battery module systems is the same as a number of the plurality of battery modules included in a second single-phase battery module system, among the plurality of single-phase battery module systems.

8. The vehicle according to claim 1, wherein each inverter includes an H-bridge single-phase inverter provided with a plurality of power semiconductor elements.

9. The vehicle according to claim 6, wherein when a polarity of the AC power source is positive (+), the first upper switch and the second lower switch are turned on, and
when the polarity of the AC power source is negative (-), the first lower switch and the second upper switch are turned on to charge the battery.

10. The vehicle according to claim 1, wherein an amount of charge charged to the battery is controlled based on an amount of a current flowing through the plurality of motor windings according to a duty ratio of a turned-on switch.

11. The vehicle according to claim 5, wherein a plurality of switches included in the inverter are switched according to a frequency and a phase of the AC power source.

12. A charging control method of a vehicle comprising a motor including a plurality of motor windings and a plurality of single-phase battery module systems connected to each of the plurality of motor windings, and including a plurality of battery modules, wherein each of the plurality of battery modules includes a battery and a power conversion module, and each power conversion module includes an inverter converting a DC voltage stored in the battery into an AC voltage to control the motor, the method comprising:
a receiving operation of receiving a charging signal for AC charging from a charger; and
when the charging signal is received, a control operation of receiving an AC voltage from an AC power source through the plurality of motor windings and controlling the inverter to charge the battery.

13. The charging control method of a vehicle of claim 12, wherein each inverter includes a first upper switch and a first lower switch provided in a first leg and connected in series; and a second upper switch and a second lower switch provided in a second leg and connected in series, and
in the control operation, when a polarity of the AC power source is positive (+), the first upper switch and the second lower switch are turned on, and when the polarity of the AC power source is negative (-), the first lower switch and the second upper switch are turned on.

14. The charging control method of a vehicle of claim 12, wherein in the control operation, an amount of charge charged to the battery is controlled based on an amount of a current flowing through the plurality of motor windings according to a duty ratio of a turned-on switch.
